# EUROPEAN PATENT SPECIFICATION

(11) **EP 4 566 878 B1**
(45) Date of publication and mention of the grant of the patent: **05.08.2026**
(21) Application number: 24383016.3
(22) Date of filing: 23.09.2024
(51) Int. Cl.: B60N 2/24, B60N 2/75, B64D 11/06

(54) **LIGHTWEIGHT SEAT FOR HIGH-DENSITY CONFIGURATION AND CLUSTER OF ADJACENT SEAT FOR HIGH-DENSITY CONFIGURATIONS**
LEICHTBAUSITZ FÜR HOCHDICHTE KONFIGURATION UND CLUSTER AUS BENACHBARTEN SITZEN FÜR HOCHDICHTE KONFIGURATIONEN
SIÈGE LÉGER POUR CONFIGURATION À HAUTE DENSITÉ ET GROUPE DE SIÈGES ADJACENTS POUR CONFIGURATIONS À HAUTE DENSITÉ

(43) Date of publication of application: 11.06.2025
(60) Divisional application: 26184205.8
(73) Proprietor: Inmuebles Molí, SL, 08107 Martorelles (ES)
(72) Inventor: SINGLA CASASAYAS, Joan, 08107 Martorelles (ES)
(74) Representative: Torner, Juncosa I Associats, SL

(56) References cited:
- WO-A1-2013/156788
- WO-A1-2017/135456
- CN-A- 115 989 124
- KR-A- 20220 075 655
- US-B1- 6 402 244
- US-B2- 7 217 891
- US-B2- 8 665 103
- US-B2- 8 674 710

## Description

### Technical field

The present invention concerns to a lightweight seat for high-density configuration, and also to a cluster of adjacent seats for such high-density configurations.

A cluster of adjacent seats is an aggrupation of several laterally adjacent seats sharing some elements, such the support structure providing attachment to the floor or the armrests, to reduce its weight.

It will be understood that a high-density configuration is an arrangement of multiples rows or multiples lines and rows of seats or of clusters of adjacent seats, in an optimized manner to achieve a high density of passengers in a given available space. The present invention is directed to an improved seat or cluster of seats integrating features directed to increase the comfort of the passengers despite the limited available space, particularly the available space for knees and legs.

### Background of the Invention

Seats for high-density configurations are already known. Those seats have a reduced thickness of the backrest to increase the available space for the knees of the user.

It is also known, for example through document US4018477A, an seat where the front portion of the seat pan can tilt downwards, through a mechanism integrated in the seat, for lowering and extending the legs. CN 115 989 124 discloses also a lightweight seat.

Despite the above, the tilting mechanism is expensive, heavy and prone to fail, increasing the maintenance costs and the fuel cost due to the increased weight. Also, these known documents do not provide any solution to further increase the available space for the knees of the user, beyond the reduction in thickness of the backrest.

The present invention solves the above and other problems in a cheap, light, resistant and therefore cost-effective manner.

### Description of the Invention

The present invention concerns to a lightweight seat for high-density configurations, as defined in claim 1.

The proposed lightweight seat for high-density configurations, comprises, as already known in the available prior art, a support structure supporting a seat pan and a backrest; wherein the seat pan comprises a rigid shell, a lining and an intermediate foam between the rigid shell and the lining.

The seat pan is the part of the seat, mostly horizontal, intended to receive and support the user's buttocks when seated, and the backrest is the part of the seat, mostly vertical, intended to receive and support the user's back when seated.

The rigid shell is a shell, for example made of plastic or lightweight metal such aluminum, that provides support for the intermediate foam that forms the cushion of the seat pan.

The seat pan can be divided between a rear portion covering at least one rear third of the seat pan in a horizontal direction, adjacent to the backrest, and a front portion, covering at least a front third of the seat pan in the horizontal direction, away from the backrest.

According to the above, if the seat pan is divided in three equally dimensioned horizontal bands, the band closer to the backrest is the rear portion mentioned above, and the band farthest away from the backrest is the front portion.

It will be understood that the orientations horizontal and vertical are referred to horizontal and vertical directions when the seat is fixed on a horizontal floor. Similarly, the directions rear, front, left and right are orientations relative with respect to a user seated on the seat.

The seat pan has an average vertical thickness equal to or less than 25mm, or equal to or less than 15mm in at least most of the surface of the rear portion of the seat pan, and/or in at least left and right rear corner regions contained within a radius of at least 10cm from the left and right rear corners of the seat pan.

Preferably, said average vertical thickness, in the corner regions, can be equal o smaller than 12mm.

The left and right rear corners of the seat pan are the rear corners of the seat pan, adjacent to the backrest, located to the right and left sides of the seat.

All the portions of the seat pan contained within a radius of 10cm from each of said left and right rear corners are the left and right corner regions.

These left and right corner regions are regions where a user sitting on the seat applies little pressure, so padding in these regions is less necessary, and a reduced thickness can be achieved.

The reduced thickness of the seat pad in this particular region is beneficial because frees up more space bellow the seat pan on those left and right regions, facilitating the insertion of the knees of a passenger seated in a rear row of seats under the seat pan.

The present invention also proposes to define, on the rigid shell of the front portion of the seat pan, a descending slope forming an angle of at least 15° regards the horizontal towards a front edge of the seat pan.

The intermediate foam defines a wedge of at least 15°, filling the increasing distance between the lining and the descending slope of the rigid shell, so that the upper surface of the seat pan, defined by the lining, remains mostly flat, while the rigid shell defines the mentioned descending slope.

The intermediate foam fills the space between the lining and the descending slope of the rigid shell with a soft material and easily collapsible under the weight of the user of the seat.

This allows the user to rest their weight on the rear portion of the seat pan, keeping the back fully reclined on the backrest, while lowering the legs and knees by compressing the intermediate foam wedge.

The lowered knee height, without moving the buttocks forward over the seat pan, combined with the reduced thickness of the front row seat, allows the knees to be partially housed under the front row seat, increasing passenger comfort without the need to increase the distance between the rows of seats.

The proposed seats can be used in passenger vehicles, especially aircrafts, but also in other vehicles such as trains or buses, as well as in stationary applications such as auditoriums, cinemas, theaters, classrooms, etc.

It will be understood that references to geometric position, such as parallel, perpendicular, tangent, etc. allow deviations up to ± 5° from the theoretical position defined by this nomenclature.

### Brief description of the Figures

The foregoing and other advantages and features will be more fully understood from the following detailed description of an embodiment with reference to the accompanying drawings, to be taken in an illustrative and non-limitative manner, in which:
Fig. 1 shows a lateral section view of the seat, sectioned for its center;

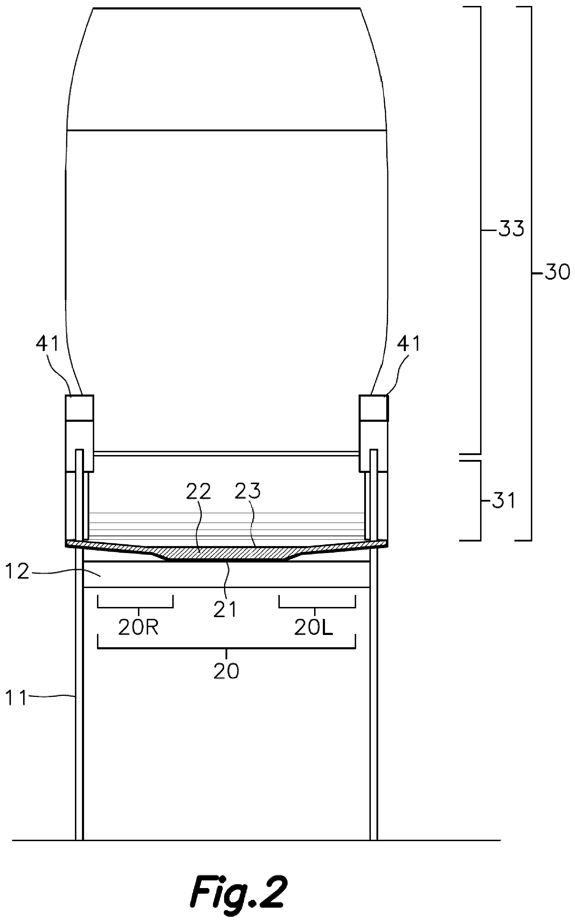

Fig. 2 shows a frontal section view of the seat sectioned through the rear portion of the seat pan;

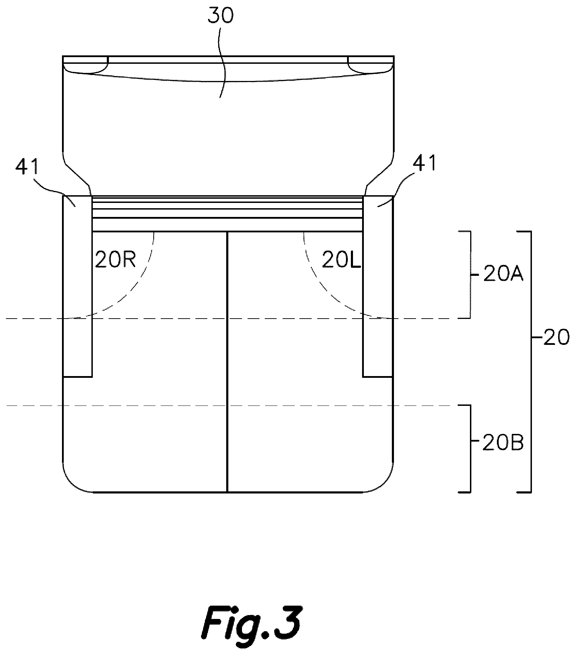

Fig. 3 shows a top view of the seat;

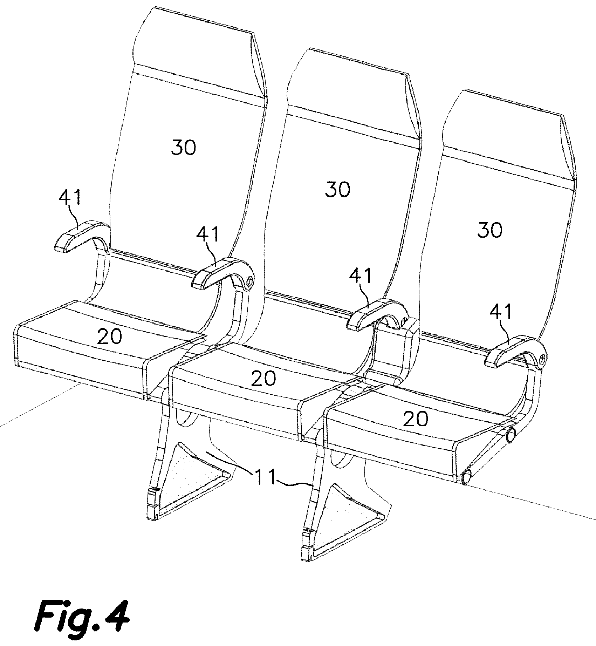

Fig. 4 shows a perspective view of a cluster of three seats.

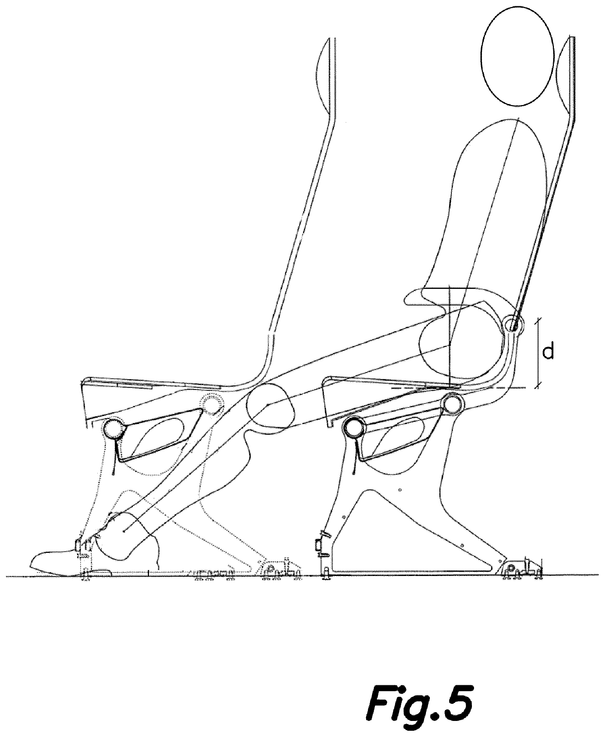

Fig. 5 shows a schematic lateral view of two successive rows of seats situated in close proximity, showing how the user of the back row can introduce the knees below the front row.

### Detailed Description of the Invention and of particular embodiments

The present invention is directed towards a lightweight seat for high-density configurations.

The proposed seat comprises a support structure supporting (10) a seat pan (20) and a backrest 30.

The seat pan (20) comprises a rigid shell (21) which provides structural support to the seat pan 20, a lining (23) which is the surface intended to contact with the user, and an intermediate foam (22) located between the rigid shell (21) and the lining (23), providing cushioning to the seat pan 20.

Preferably, the backrest also comprises a rigid shell, a lining and an intermediate foam between the rigid shell and the lining.

The seat pan (20) has a vertical thickness equal to or less than 25mm, or equal to or less than 15mm in at least most of the surface of a rear portion (20A) of the seat pan (20), defined on at least one rear third of the seat pan (20) in a horizontal direction, and/or in at least left and right rear corner regions (20L, 20R) contained within a radius of at least 10 cm from the left and right rear corners of the seat pan (20).

According to the above, the thickness of the seat pan, measured in the vertical direction, is equal to or less than 25mm or 15mm at least in the indicated regions of the left and right rear corner regions, and also in most of the rear portion of the seat pan defined in the rear one third of the seat pan closest to the backrest 30.

The reduced thickness, especially in the left and right corer regions 20L, 20R, provides extra free space below the seat pan to introduce the knees of a user seated in a rear row of seats.

Also, in a front portion (20B) of the seat pan, covering at least a front third, or at least a front half, of the seat pan (20) in the horizontal direction, the rigid shell (21) defines a descending slope forming an angle (a) of at least 15°, and preferably between 16° and 25°, regards the horizontal towards a front edge of the seat pan (20).

The intermediate foam (22) defines a wedge of at least 15°, and preferably between 16° and 24°, filling the increasing distance between the lining (23) and the descending slope of the rigid shell (21), providing an increased compressible cushioning in the front portion of the seat pan.

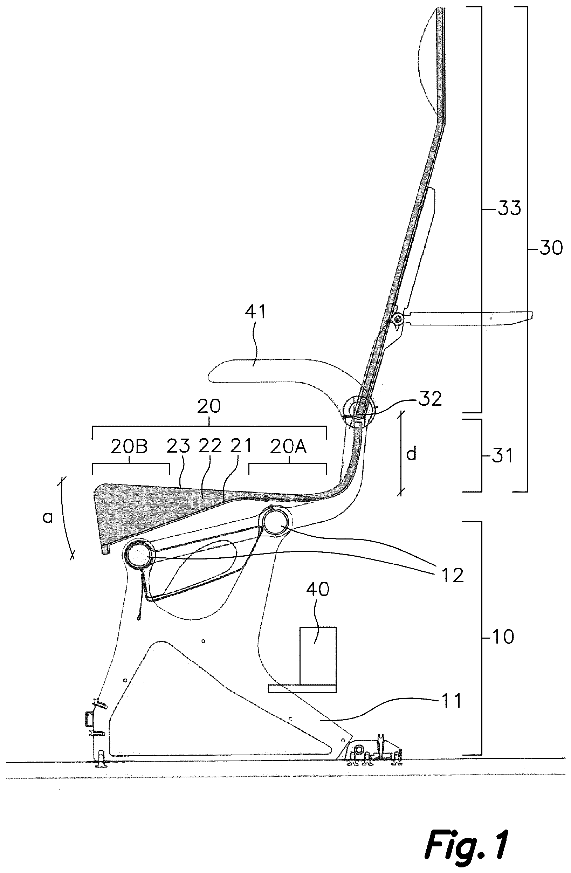

This is shown in Fig. 1, where the wedge of foam fills the gap left by the downward slope of the rigid shell, leaving the lining substantially flat and horizontal.

This increased compressible cushioning allows the user to push the legs down, compressing the wedge of intermediate foam, lowering the height of its knees while maintaining the back rested on the backrest. The lowered height of the knees in combination with the reduced thickness of the seat pan allows the user to introduce the knees below the seat pan of the front seat increasing its available space and comfort.

According to a preferred embodiment, in the left and right rear corner regions (20L, 20R), the rigid shell (21) of the seat pan (20) is raised in the vertical direction, in average, between 15mm and 40mm, or between 20mm and 30mm, in the vertical direction regards the rigid shell (21) located between said left and right rear corner regions (20L, 20R). This lowered portion of the rigid shell located between the left and right rear corner regions allows for an increased thickness of the intermediate foam where rests most of the weight of the user seated on the seat pan, increasing the comfort of the seat pan without reducing the available space for the knees under the left and right rear corner regions (20L, 20R).

The wedge defined by the intermediate foam (22) preferably has a density below 35 kg/m³ or below 25 kg/m³. This low density allows for an easy collapse of the wedge under the weight of the legs of the user when required.

Also, the wedge defined by the intermediate foam (22) may contain at least one hollow cavity, or a hollow cavity occupying at least a 15%, or at least a 25%, of the volume of the wedge. Said at least one hollow cavity will make easier the collapse of the wedge under the weight of the legs when required, allowing the use of a foam with a higher density, for example a density equal or above 40kg/m³. Those cavities permit the use of the same foam, with the same density, in all the seat pan (20), but achieving a different rigidity in different regions thereof, particularly softer in the foam constituting the wedge.

According to an embodiment, the at least one cavity can be two or more symmetric cavities separated by interposed vertical foam walls.

The backrest (30) can be articulated around an articulation joint (32). In this case, the articulation joint (32) of the backrest (30) will be preferably located at a distance (d) of between 100mm and 180mm, or between 120mm and 160mm above the upper surface of the seat pan (20), intended to receive the buttocks of the user.

The human back folds above the sacrum, in the lumbar region, therefore the folding of the backrest in the lowest portion of the backrest is not required. Having the articulated joint 32 at least 10cm above the upper surface of the seat pan, moves all the elements related to such articulated joint above the heigh of the knees of the user of the rear row, allowing for a further increase in the available space for the knees and an additional increase in comfort.

Preferably, a lower portion (31) of the backrest (30), defined below the articulation joint (32), integrates an upward extension of the rigid shell (21) of the seat pan (20), said upward extension providing structural support for the lower portion 31 of the backrest in a very space effective manner.

The proposed invention further comprises, according to an optional embodiment, at least one elastic spring partially inserted in a housing defined in the lower portion (31) of the backrest (30) and partially inserted in a housing defined in an upper portion (33) of the backrest (30), defined above the articulation joint (32). Such elastic spring allows the user to push the backrest towards a reclined position, deforming the elastic spring, and returns the backrest 30 to the upward position when the user releases its pushing force.

A blocking mechanism, common in the industry, can be integrated in the seat to maintain the backrest in the upward position even against a pushing force when in the blocking position and to allow the reclining of the backrest when in a release position.

Optionally, the at least one elastic spring can be one of the following: a coil spring; or two nested counter-rotating coil springs, or a transversally flattened coil spring, or two nested and transversally flattened counter-rotating coil springs.

A transversally flattened coil spring is a coil spring which has been flattened in a transversal direction perpendicular to the central axis thereof, reducing its transversal width, reducing the required space of the housing.

According to a preferred embodiment, the support structure (10) may comprise at least two parallel vertical structures (11) and at least two horizontal tubular profiles (12), transversal to the vertical structures (11). The rigid shell (21) can be attached to the at least two horizontal tubular profiles (12).

The seat may further comprise a left foldable footrest (40) connected to one vertical structure (11), and a right foldable footrest (40) connected to the other vertical structure (11), both movable between a vertical fold position and a horizontal extended position, both left and right foldable footrests (40) being located below the rear portion of the seat pan for servicing a user of a seat located behind the seat.

The seat may further comprise a left foldable armrest (41) and a right foldable armrest (41) both movable between a vertical fold position and a horizontal extended position, the left and right foldable armrests (41) including an overload release mechanism set to lower the armrest (41) under loads greater than 30kg or greater than 20kg.

The left and right foldable armrests (41) may further include a friction retainer set to keep the armrest immobile, at any intermediate position between the vertical fold position and the horizontal extended position, under forces of less than 20kg, or less than 30kg.

According to a second aspect, the present invention is directed towards a cluster of adjacent seats for high-density configurations wherein a single support structure (10) supports all the adjacent seats of the cluster, each seat including some or all the features described above and described in any of the claims 1 to 10.

The cluster is an aggregation of several adjacent seats sharing at least the support structure to reduce the overall weight.

According to a preferred embodiment, the seats are three laterally adjacent seats.

This cluster of three seats may include four equally spaced armrests (41) corresponding to two intermediate armrests (41), located between adjacent seats, and two extreme armrests (41), located on the left and right sides of the cluster of seats.

According to an embodiment of the present invention, the central seat is centered between the intermediate armrests (41), the left seat of the cluster is closer, or between 30mm and 50mm closer, to the extreme armrest (41) of the left side of the cluster than to the adjacent intermediate armrest (41), and the right seat of the cluster is closer, or between 30mm and 50mm closer, to the extreme armrest (41) of the right side of the cluster than to the adjacent intermediate armrest (41).

This feature increases slightly the lateral distance between adjacent seats, without increasing the overall length of the cluster, defined by the distance between the left and right armrests.

According to another embodiment, the seat pans (20) of all the seats of the cluster share a single rigid shell (21). This single rigid shell provides a great strength and allows a reduction in the weight of the support structure.

## Claims

1. Lightweight seat for high-density configurations, the seat comprising:
a support structure (10) supporting a seat pan (20) and a backrest (30); wherein
the seat pan (20) comprises a rigid shell (21), a lining (23) and an intermediate foam (22) between the rigid shell (21) and the lining (23); wherein
the seat pan (20) has an average vertical thickness equal to or less than 25mm, or equal to or less than 15mm, in at least most of the surface of a rear portion (20A) of the seat pan (20), defined on at least one rear third of the seat pan (20) in a horizontal direction, and/or in at least left and right rear corner regions (20L, 20R) contained within a radius of at least 10 cm from the left and right rear corners of the seat pan (20);
**characterized in that**
a front portion (20B) of the seat pan, covering at least a front third, or at least a front half, of the seat pan (20) in the horizontal direction, is a collapsible portion of the seat pan, adapted to be collapsable under the weight of a user of the seat, the collapsible portion being formed by the portion of the rigid shell (21) contained in the front portion (20B) of the seat pan, which forms a descending slope with an angle (a) of at least 15° regards the horizontal towards a front edge of the seat pan (20), and by the portion of the intermediate foam (22) contained in the front portion (20B) of the seat pan, which defines a wedge of at least 15°, filling the increasing distance between the lining (23) and the descending slope of the portion of the rigid shell (21) contained in the front portion (20B) of the seat pan.

2. The seat according to claim 1 wherein in the left and right rear corner regions (20L, 20R), the rigid shell (21) of the seat pan (20) is raised in the vertical direction, in average, between 15mm and 40mm, or between 20mm and 30mm, regards the rigid shell (21) located between said left and right rear corner regions (20L, 20R).

3. The seat according to claim 1 or 2 wherein the wedge defined by the intermediate foam (22) has a density below 35 kg/m³ or below 25 kg/m³.

4. The seat according to claim 1 or 2 wherein the wedge defined by the intermediate foam (22) contains at least one hollow cavity, or a hollow cavity occupying at least a 15%, or at least a 25%, of the volume of the wedge.

5. The seat according to claim 4 wherein the at least one cavity are two or more symmetric cavities separated by interposed vertical foam walls.

6. The seat according to any preceding claim wherein the backrest (30) is articulated around an articulation joint (32), and wherein the articulation joint (32) of the backrest (30) is located at a distance of between 100mm and 180mm, or between 120mm and 160mm above the upper surface of the seat pan (20).

7. The seat according to claim 6 wherein a lower portion (31) of the backrest (30), defined below the articulation joint (32), integrates an upward extension of the rigid shell (21) of the seat pan (20).

8. The seat according to claim 7 wherein at least one elastic spring is partially inserted in a housing defined in the lower portion (31) of the backrest (30) and is partially inserted in a housing defined in an upper portion (33) of the backrest (30), defined above the articulation joint (32), and wherein the at least one elastic spring is selected among: a coil spring; or two nested counter-rotating coil springs, or a transversally flattened coil spring, or two nested and transversally flattened counter-rotating coil springs.

9. The seat according to any preceding claim wherein the support structure (10) comprises at least two parallel vertical structures (11) and at least two horizontal tubular profiles (12), transversal to the vertical structures (11), wherein the rigid shell (21) is attached to the at least two horizontal tubular profiles (12).

10. The seat according to claim 9 wherein the seat further comprises a left foldable footrest (40) connected to one vertical structure (11), and a right foldable footrest (40) connected to the other vertical structure (11), both movable between a vertical fold position and a horizontal extended position, both left and right foldable footrests (40) being located below the rear portion of the seat pan for servicing a user of a seat located behind the seat, the left and right foldable footrests (40).

11. The seat according to any preceding claim wherein the seat further comprises a left foldable armrest (41) connected to one vertical structure (11), and a right foldable armrest (41) connected to the other vertical structure (11), both movable between a vertical fold position and a horizontal extended position, the left and right foldable armrests (41) including an overload release mechanism set to lower the armrest (41) under loads greater than 30kg or greater than 20kg.

12. The seat according to claim 11 wherein the left and right foldable armrests (41) include a friction retainer set to keep the armrest immobile, at any intermediate position between the vertical fold position and the horizontal extended position, under forces of less than 20kg, or less than 30kg.

13. Cluster of adjacent seats for high-density configurations wherein a single support structure (10) supports all the adjacent seats of the cluster, each seat including all the features of any of the preceding claims 1 to 12.

14. The cluster of adjacent seats according to claim 13 wherein the seats are three seats, and include four equally spaced armrests (41) corresponding to two intermediate armrests (41) located between adjacent seats and two extreme armrests (41) located on the left and right sides of the cluster of seats, wherein the central seat is centered between the intermediate armrests (41), the left seat of the cluster is closer, or between 30mm and 50mm closer, to the extreme armrest (41) of the left side of the cluster than to the adjacent intermediate armrest (41), and the right seat of the cluster is closer, or between 30mm and 50mm closer, to the extreme armrest (41) of the right side of the cluster than to the adjacent intermediate armrest (41).

15. The cluster of adjacent seats according to claim 13 or 14 wherein the seat pans (20) of all the seats of the cluster share a single rigid shell (21).

## Patentansprüche

1. Leichter Sitz für Hochdichtekonfigurationen, wobei der Sitz Folgendes umfasst:
eine Trägerstruktur (10), die eine Sitzschale (20) und eine Rückenlehne (30) trägt; wobei
die Sitzschale (20) eine starre Schalung (21), eine Auskleidung (23) und einen Zwischenschaum (22) zwischen der starren Schalung (21) und der Auskleidung (23) umfasst; wobei
die Sitzschale (20) eine durchschnittliche vertikale Dicke gleich oder kleiner als 25 mm oder gleich oder kleiner als 15 mm aufweist, mindestens auf dem größten Teil der Oberfläche eines hinteren Abschnitts (20A) der Sitzschale (20), der in horizontaler Richtung auf mindestens einem hinteren Drittel der Sitzschale (20) definiert ist, und/oder in mindestens den linken und rechten hinteren Eckbereichen (20L, 20R), die innerhalb eines Radius von mindestens 10 cm von den linken und rechten hinteren Ecken der Sitzschale (20) enthalten sind;
**dadurch gekennzeichnet, dass**
ein vorderer Abschnitt (20B) der Sitzschale, der in horizontaler Richtung mindestens ein vorderes Drittel oder mindestens eine vordere Hälfte der Sitzschale (20) abdeckt, ein zusammenklappbarer Abschnitt der Sitzschale ist, der dazu angepasst ist, unter dem Gewicht eines Benutzers des Sitzes zusammenklappbar zu sein, wobei der zusammenklappbare Abschnitt durch den Abschnitt der starren Schalung (21) gebildet wird, der im vorderen Abschnitt (20B) der Sitzschale enthalten ist und eine abfallende Neigung mit einem Winkel (a) von mindestens 15° zur Horizontalen zu einer Vorderkante der Sitzschale (20) hin bildet, und durch den Abschnitt des Zwischenschaums (22), der im vorderen Abschnitt (20B) der Sitzschale enthalten ist und einen Keil von mindestens 15° bildet, der die zunehmende Entfernung zwischen der Auskleidung (23) und der abfallenden Neigung des Abschnitts der starren Schalung (21) ausfüllt, der im vorderen Abschnitt (20B) der Sitzschale enthalten ist.

2. Sitz nach Anspruch 1, wobei in dem linken und rechten hinteren Eckbereich (20L, 20R) die starre Schalung (21) der Sitzschale (20) in vertikaler Richtung im Durchschnitt um 15 mm bis 40 mm oder um 20 mm bis 30 mm angehoben ist, bezogen auf die starre Schalung (21), die sich zwischen dem linken und rechten hinteren Eckbereich (20L, 20R) befindet.

3. Sitz nach Anspruch 1 oder 2, wobei der durch den Zwischenschaum (22) gebildete Keil eine Dichte von unter 35 kg/m³ oder unter 25 kg/m³ aufweist.

4. Sitz nach Anspruch 1 oder 2, wobei der durch den Zwischenschaum (22) definierte Keil mindestens eine hohle Vertiefung enthält oder eine hohle Vertiefung, die mindestens 15 % oder mindestens 25 % des Volumens des Keils einnimmt.

5. Sitz nach Anspruch 4, wobei die mindestens eine Vertiefung aus zwei oder mehr symmetrischen Vertiefungen besteht, die durch dazwischenliegende vertikale Wandungen aus Schaumstoff voneinander getrennt sind.

6. Sitz nach einem der vorhergehenden Ansprüche, wobei die Rückenlehne (30) um eine Gelenkverbindung (32) herum gelenkig gelagert ist und wobei sich die Gelenkverbindung (32) der Rückenlehne (30) in einer Entfernung von 100 mm bis 180 mm oder von 120 mm bis 160 mm über der Oberseite der Sitzschale (20) befindet.

7. Sitz nach Anspruch 6, wobei ein unterer Abschnitt (31) der Rückenlehne (30), der unterhalb der Gelenkverbindung (32) definiert ist, eine nach oben verlaufende Verlängerung der starren Schalung (21) der Sitzschale (20) integriert.

8. Sitz nach Anspruch 7, wobei mindestens eine elastische Feder teilweise in ein im unteren Abschnitt (31) der Rückenlehne (30) definiertes Gehäuse eingeführt ist und teilweise in ein im oberen Abschnitt (33) der Rückenlehne (30) definiertes Gehäuse eingeführt ist, das oberhalb der Gelenkverbindung (32) definiert ist, und wobei die mindestens eine elastische Feder ausgewählt ist aus: einer Spulenfeder; oder zwei ineinander verschachtelten, gegenläufigen Spulenfedern; oder einer quer abgeflachten Spulenfeder; oder zwei ineinander verschachtelten und quer abgeflachten, gegenläufigen Spulenfedern.

9. Sitz nach einem der vorhergehenden Ansprüche, wobei die Trägerstruktur (10) mindestens zwei parallele vertikale Strukturen (11) und mindestens zwei horizontale Rohrprofile (12) umfasst, die quer zu den vertikalen Strukturen (11) verlaufen, wobei die starre Schalung (21) an den mindestens zwei horizontalen Rohrprofilen (12) angebracht ist.

10. Sitz nach Anspruch 9, wobei der Sitz ferner eine linke, klappbare Fußstütze (40) umfasst, die mit einer vertikalen Struktur (11) verbunden ist, sowie eine rechte klappbare Fußstütze (40), die mit der anderen vertikalen Struktur (11) verbunden ist, wobei beide zwischen einer vertikalen Klappposition und einer horizontalen Ausfahrposition bewegbar sind und sich sowohl die linke als auch die rechte klappbare Fußstütze (40) unterhalb des hinteren Abschnitts der Sitzschale befinden, um einem Benutzer eines hinter diesem Sitz befindlichen Sitzes die Nutzung der linken und rechten klappbaren Fußstütze (40) zu ermöglichen.

11. Sitz nach einem der vorhergehenden Ansprüche, wobei der Sitz ferner eine linke klappbare Armlehne (41) umfasst, die mit einer vertikalen Struktur (11) verbunden ist, sowie eine rechte klappbare Armlehne (41), die mit der anderen vertikalen Struktur (11) verbunden ist, wobei beide zwischen einer vertikalen Klappposition und einer horizontalen Ausfahrposition bewegbar sind und die linke und die rechte klappbare Armlehne (41) einen Überlastauslösemechanismus beinhalten, der so eingestellt ist, dass die Armlehne (41) bei Belastungen von mehr als 30 kg oder mehr als 20 kg abgesenkt wird.

12. Sitz nach Anspruch 11, wobei die linke und die rechte klappbare Armlehne (41) eine Reibungshalterung beinhalten, die so eingestellt ist, dass sie die Armlehne in jeder Zwischenposition zwischen der vertikalen Klappposition und der horizontalen Ausfahrposition unter Kräften von weniger als 20 kg oder weniger als 30 kg unbeweglich hält.

13. Gruppierung benachbarter Sitze für Hochdichtekonfigurationen, wobei eine einzige Trägerstruktur (10) alle benachbarten Sitze der Gruppierung trägt und jeder Sitz alle Merkmale eines der vorhergehenden Ansprüche 1 bis 12 beinhaltet.

14. Gruppierung benachbarter Sitze nach Anspruch 13, wobei die Sitze drei Sitze sind und vier gleichmäßig beabstandete Armlehnen (41) beinhalten, die zwei zwischen benachbarten Sitzen angeordnete zwischenliegende Armlehnen (41) und zwei sich auf der linken und rechten Seite der Sitzgruppierung befindende endständige Armlehnen (41) entsprechen, wobei der zentrale Sitz zwischen den zwischenliegenden Armlehnen (41) zentriert ist, der linke Sitz der Gruppierung näher oder zwischen 30 mm und 50 mm näher an der endständigen Armlehne (41) auf der linken Seite der Gruppierung liegt als an der benachbarten zwischenliegenden Armlehne (41), und der rechte Sitz der Gruppierung näher oder zwischen 30 mm und 50 mm näher an der endständigen Armlehne (41) auf der rechten Seite der Gruppierung liegt als an der benachbarten zwischenliegenden Armlehne (41).

15. Gruppierung benachbarter Sitze nach Anspruch 13 oder 14, wobei sich die Sitzschalen (20) aller Sitze der Gruppierung eine einzige starre Schalung (21) teilen.

## Revendications

1. Siège léger destiné à des configurations à haute densité, le siège comprenant :
une structure de support (10) supportant une assise (20) et un dossier (30) ; dans lequel
l'assise (20) comprend une coque rigide (21), une garniture (23) et une mousse intermédiaire (22) entre la coque rigide (21) et la garniture (23) ; dans lequel
l'assise (20) présente une épaisseur verticale moyenne égale ou inférieure à 25 mm, ou égale ou inférieure à 15 mm, sur au moins la majeure partie de la surface d'une partie arrière (20A) de l'assise (20), définie sur au moins un tiers arrière de l'assise (20) dans une direction horizontale, et/ou dans au moins des régions d'angle arrière gauche et droit (20L, 20R) comprises dans un rayon d'au moins 10 cm à partir des coins arrière gauche et droit de l'assise (20) ;
**caractérisé en ce que**
une partie avant (20B) de l'assise, couvrant au moins un tiers avant, ou au moins une moitié avant, de l'assise (20) dans la direction horizontale, est une partie effondrable de l'assise, apte à s'effondrer sous le poids d'un utilisateur du siège, la partie effondrable étant formée par la partie de la coque rigide (21) comprise dans la partie avant (20B) de l'assise, qui forme une pente descendante présentant un angle (a) d'au moins 15° par rapport à l'horizontale en direction d'un bord avant de l'assise (20), et par la partie de la mousse intermédiaire (22) comprise dans la partie avant (20B) de l'assise, qui définit un coin d'au moins 15°, remplissant la distance croissante entre la garniture (23) et la pente descendante de la partie de la coque rigide (21) comprise dans la partie avant (20B) de l'assise.

2. Siège selon la revendication 1, dans lequel, dans les régions d'angle arrière gauche et droit (20L, 20R), la coque rigide (21) de l'assise (20) est surélevée dans la direction verticale, en moyenne, de 15 mm à 40 mm, ou de 20 mm à 30 mm, par rapport à la coque rigide (21) située entre lesdites régions d'angle arrière gauche et droit (20L, 20R).

3. Siège selon la revendication 1 ou 2, dans lequel le coin défini par la mousse intermédiaire (22) présente une densité inférieure à 35 kg/m³ ou inférieure à 25 kg/m³.

4. Siège selon la revendication 1 ou 2, dans lequel le coin défini par la mousse intermédiaire (22) contient au moins une cavité creuse, ou une cavité creuse occupant au moins 15 %, ou au moins 25 %, du volume du coin.

5. Siège selon la revendication 4, dans lequel la ou lesdites cavités sont constituées de deux cavités symétriques ou plus, séparées par des parois verticales de mousse interposées.

6. Siège selon l'une quelconque des revendications précédentes, dans lequel le dossier (30) est articulé autour d'une articulation (32), et dans lequel l'articulation (32) du dossier (30) est située à une distance comprise entre 100 mm et 180 mm, ou entre 120 mm et 160 mm, au-dessus de la surface supérieure de l'assise (20).

7. Siège selon la revendication 6, dans lequel une partie inférieure (31) du dossier (30), définie au-dessous de l'articulation (32), intègre un prolongement ascendant de la coque rigide (21) de l'assise (20).

8. Siège selon la revendication 7, dans lequel au moins un ressort élastique est partiellement inséré dans un logement défini dans la partie inférieure (31) du dossier (30) et est partiellement inséré dans un logement défini dans une partie supérieure (33) du dossier (30), définie au-dessus de l'articulation (32), et dans lequel ledit au moins un ressort élastique est sélectionné parmi : un ressort hélicoïdal ; ou deux ressorts hélicoïdaux imbriqués à enroulements opposés ; ou un ressort hélicoïdal aplati transversalement ; ou deux ressorts hélicoïdaux imbriqués, aplatis transversalement et à enroulements opposés.

9. Siège selon l'une quelconque des revendications précédentes, dans lequel la structure de support (10) comprend au moins deux structures verticales parallèles (11) et au moins deux profilés tubulaires horizontaux (12), transversaux aux structures verticales (11), dans lequel la coque rigide (21) est fixée auxdits au moins deux profilés tubulaires horizontaux (12).

10. Siège selon la revendication 9, dans lequel le siège comprend en outre un repose-pieds rabattable gauche (40) relié à une structure verticale (11), et un repose-pieds rabattable droit (40) relié à l'autre structure verticale (11), les deux étant mobiles entre une position repliée verticale et une position déployée horizontale, les repose-pieds rabattables gauche et droit (40) étant situés au-dessous de la partie arrière de l'assise afin de servir un utilisateur d'un siège situé derrière le siège.

11. Siège selon l'une quelconque des revendications précédentes, dans lequel le siège comprend en outre un accoudoir rabattable gauche (41) relié à une structure verticale (11), et un accoudoir rabattable droit (41) relié à l'autre structure verticale (11), les deux étant mobiles entre une position repliée verticale et une position déployée horizontale, les accoudoirs rabattables gauche et droit (41) comprenant un mécanisme de déclenchement en cas de surcharge configuré pour abaisser l'accoudoir (41) sous des charges supérieures à 30 kg ou supérieures à 20 kg.

12. Siège selon la revendication 11, dans lequel les accoudoirs rabattables gauche et droit (41) comprennent un dispositif de retenue par friction configuré pour maintenir l'accoudoir immobile, dans toute position intermédiaire entre la position repliée verticale et la position déployée horizontale, sous des forces inférieures à 20 kg, ou inférieures à 30 kg.

13. Ensemble de sièges adjacents destiné à des configurations à haute densité, dans lequel une structure de support unique (10) supporte tous les sièges adjacents de l'ensemble, chaque siège comprenant toutes les caractéristiques de l'une quelconque des revendications précédentes 1 à 12.

14. Ensemble de sièges adjacents selon la revendication 13, dans lequel les sièges sont au nombre de trois et comprennent quatre accoudoirs (41) espacés de manière égale, correspondant à deux accoudoirs intermédiaires (41) situés entre des sièges adjacents et à deux accoudoirs extrêmes (41) situés sur les côtés gauche et droit de l'ensemble de sièges, dans lequel le siège central est centré entre les accoudoirs intermédiaires (41), le siège gauche de l'ensemble est plus proche, ou de 30 mm à 50 mm plus proche, de l'accoudoir extrême (41) du côté gauche de l'ensemble que de l'accoudoir intermédiaire adjacent (41), et le siège droit de l'ensemble est plus proche, ou de 30 mm à 50 mm plus proche, de l'accoudoir extrême (41) du côté droit de l'ensemble que de l'accoudoir intermédiaire adjacent (41).

15. Ensemble de sièges adjacents selon la revendication 13 ou 14, dans lequel les assises (20) de tous les sièges de l'ensemble partagent une coque rigide unique (21).
